# EUROPÄISCHE PATENTSCHRIFT

(11) **EP 3 077 793 B1**
(45) Veröffentlichungstag und Bekanntmachung des Hinweises auf die Patenterteilung: **11.04.2018**
(21) Anmeldenummer: 14809367.7
(22) Anmeldetag: 04.12.2014
(51) Int. Cl.: G01N 21/01, B01L 3/00, G01N 21/03

(54) **ANALYSEVORRICHTUNG (PHOTOMETER) MIT SERIELLER LICHTFÜHRUNG**
ANALYSIS DEVICE (PHOTOMETER) HAVING A SERIAL LIGHT GUIDE
DISPOSITIF D'ANALYSE (PHOTOMÈTRE) À GUIDES DE LUMIÈRE EN SÉRIE

(30) Priorität: 04.12.2013 DE 102013224847
(43) Veröffentlichungstag der Anmeldung: 12.10.2016
(73) Patentinhaber: Implen GmbH, 81829 München (DE)
(72) Erfinder: NICKEL, Ulrich, 91058 Erlangen (DE); RIEPL, Michael, 81541 München (DE); SAHIRI, Thomas, Calabasas, CA 91302 (US)
(74) Vertreter: Hoffmann Eitle
(86) Internationale Anmeldenummer: PCT/EP2014/076565
(87) Internationale Veröffentlichungsnummer: WO 2015/082612

(56) Entgegenhaltungen:
- WO-A1-2010/039975
- US-A- 3 588 496
- US-A- 3 869 613
- US-A- 5 774 209
- US-A- 5 894 128
- US-A1- 2006 227 326
- US-A1- 2010 085 571
- GALLAGHER SEAN R ET AL: "Appendix 3D: Quantitation of DNA and RNA with absorption and fluorescence spectroscopy", CURRENT PROTOCOLS IN MOLECULAR BIOLOGY, JOHN WILEY & SONS, INC, US, Bd. A.3D.1, Nr. Supp. 76, 1. November 2006 (2006-11-01), Seiten 1-21, XP002640010, ISSN: 1934-3647

## Beschreibung

### TECHNISCHES GEBIET

Die vorliegende Erfindung betrifft eine Vorrichtung für die spektralphotometrische Analyse von kleinen Mengen einer flüssigen Probe, beispielsweise eines Tropfens, wobei Licht durch die Probe bzw. die Proben geführt wird und photometrisch, spektralphotometrisch, fluorimetrisch oder spektral-fluorimetrisch detektierbar bzw. analysierbar ist.

### STAND DER TECHNIK

Im Stand der Technik werden flüssige Proben spektrometrisch analysiert, indem ein Lichtstrahl durch die Probe geführt und das entstehende Signallicht (beispielsweise transmittiertes Licht oder Fluoreszenzstrahlung) mithilfe eines Spektrometers oder eines anderen geeigneten Detektors ausgewertet wird. Eine verwendete analytische Methode, um Substanzen sowohl qualitativ als auch quantitativ zu erfassen, ist hierbei die UV-VIS Spektroskopie, die auch als Spektralphotometrie bekannt ist. Während allgemein zur Halterung und Aufnahme von in ausreichender Menge zur Verfügung stehenden Proben Küvetten bekannt sind, werden für kleinste Mengen flüssiger Proben sogenannte Kleinstvolumenmesszellen eingesetzt, wie sie in der EP 1 743 162 B1 beschrieben sind. Obwohl mit derartigen Vorrichtungen eine Analyse auch von kleinsten Flüssigkeitsmengen (< 10 µl) ermöglicht wurde, verbleibt das Problem, dass gerade bei solchen kleinsten Probenmengen und den entsprechend kleinen zu durchleuchtenden Volumina Verunreinigungen wie Staub, Fussel usw. beispielsweise auf den optischen Oberflächen des Probenhalters eine Veränderung der intrinsischen Basislinie des Signals bewirken, also mit anderen Worten zu einem unerwünschten Signalhintergrund führen, welcher die Messergebnisse beeinträchtigt und verfälscht. Ein weiteres Problem stellen Intensitätsschwankungen der Lichtquelle dar, welche die quantitative Analyse beeinflussen. In herkömmlichen Versuchsaufbauten ist zur Kompensation von solchen Intensitätsschwankungen die sog. Zweistrahlphotometrie bekannt, bei welcher der einfallende Lichtstrahl aufgeteilt und parallel durch die Probe und eine Referenz geschickt wird. Allerdings ist die Zweistrahlphotometrie gerätetechnisch wesentlich aufwendiger und hat einen größeren Platzbedarf.

Aus dem Stand der Technik, wie beispielsweise der US 3,987,303 A, sind Infrarot-Gas-Detektoren bekannt, in deren Kammer eine Infrarot-Quelle und ein ihr gegenüberliegender Infrarot-Detektor sowie mehrere, beispielsweise drei Probenaufnahmen (2 Referenzen und eine Probe) angeordnet sind. Im Betrieb befindet sich jeweils eine der beiden Referenzzellen sowie nachgeschaltet die Probenzelle im Lichtweg.

Aus der WO 2010/039975 A1 ist eine Vorrichtung mit auf Oberflächenspannung basierender Probenaufnahme für Kleinstvolumina unter 10 µl sowie einer Lichtquelle, einem Detektor und Glasfasern bekannt. Die beschriebene Vorrichtung arbeitet als "dual mode optical analysis system". Dabei werden in der Vorrichtung die Probenaufnahme für Kleinstvolumina abwechselnd mit einer Probenaufnahme für große Flüssigkeitsmengen von bis zu 50 ml in einer Küvette vom Anregungslicht entlang unterschiedlicher Lichtleiter spektroskopisch untersucht.

Aus der US 3,588,496 A ist ein System zur Analyse u.a. von Flüssigkeiten bekannt, bei dem zur Analyse räumlich getrennte Lichtpfade mit Licht unterschiedlicher spektraler Eigenschaften verwendet wird. Weiter sind beispielsweise aus den Schriften US 3,869,613 A oder US 5,894,128 A Analysevorrichtungen mit mehreren Referenzzellen bekannt, welche zur Analyse von Gasen dienen und ebenfalls mindestens zwei Lichtpfade aufweisen, entlang derer zeitlich getrennt Licht unterschiedlicher spektraler Eigenschaften zum Probengas gelenkt wird. Die verschiedenen Spektren der Referenzen müssen gut unterscheidbar sein, was dadurch erreicht wird, dass Gase scharfe Absorptionslinien besitzen.

### DARSTELLUNG DER ERFINDUNG

Ausgehend von dem obigen Problem ist es eine Aufgabe der vorliegenden Erfindung, eine Vorrichtung für die Analyse von kleinen Mengen einer bevorzugt flüssigen Probe bereitzustellen, bei welchem mit nur einem Lichtstrahl das intrinsische Referenzspektrum gleichzeitig mit der Messung der Probe aufgenommen werden kann, oder aber Spektren von kleinsten Mengen unterschiedlicher Proben zeitgleich aufgenommen werden können, wobei ein einziger optimaler Lichtweg durch die Vorrichtung gewährleistet wird.

Diese Aufgabe wird mit einer erfindungsgemäßen Vorrichtung für die Analyse einer oder mehrerer Proben mit den Merkmalen des Anspruchs 1 gelöst. Vorteilhafte Ausgestaltungen ergeben sich aus den Unteransprüchen.

Gemäß der Erfindung umfasst die Vorrichtung für die spektralphotometrische Analyse einer oder mehrerer flüssiger Proben eine Lichtquelle zur Erzeugung und Ausstrahlung von Licht entlang eines einzigen Lichtwegs, einen ersten Probenhalter mit einer Aufnahmestelle für eine kleinste Menge einer ersten Probe, welcher so im Lichtweg angeordnet ist, dass die Aufnahmestelle vom Licht durchstrahlt wird, wobei die Aufnahmestelle eine Aufnahmefläche ist und der Aufnahmefläche gegenüber eine bewegliche Fläche vorgesehen ist, welche sich auf die Aufnahmefläche zubewegen kann, so dass die flüssige Probe zwischen der Aufnahmefläche und der beweglichen Fläche eingelegt wird; einen zweiten Probenhalter für eine zweite Probe, welcher so im Lichtweg angeordnet ist, dass der zweite Probenhalter vom Licht durchstrahlt wird; und einen Detektor zur Erfassung des von den Probenhaltern entlang des Lichtwegs kommenden Lichts, wobei der Lichtweg dabei von der Lichtquelle durch die beiden Probenhalter zum Detektor verläuft und das Licht die beiden Probenhalter sukzessiv durchstrahlt. Der Lichtweg verläuft dabei von der Lichtquelle durch die beiden Probenhalter zum Detektor und kann den geometrischen Anforderungen des Versuchsaufbaus entsprechend beispielsweise mithilfe von Spiegeln, Lichtleitern (Lichtleitfasern) und/oder anderen optischen Komponenten gelenkt werden. Wichtig ist, dass es sich hierbei um nur einen Lichtweg handelt, der Lichtweg also nicht aufgeteilt wird, so dass nur ein Lichtstrahl zwei Proben in unterschiedlicher geometrischer Form, beispielsweise in Form eines Tropfens und innerhalb einer Küvette, sukzessiv durchstrahlen kann. So werden die Vorteile eines Zweistrahlphotometers, nämlich die synchrone (nicht zeitverzögerte) Referenzmessung mit den Vorteilen des Einstrahlphotometers, nämlich der einfacheren Kalibrierung und dem einfacheren Aufbau (weniger optische Bauelemente und elektronische Komponenten wie Strahlungsteiler und Chopper) kombiniert, und es kann ein sehr effektiver Abgleich der Basislinie des Signals erzielt werden. Im Vergleich zu solchen Zweistrahl-Photometern, welche zwei Lichtwege abwechselnd durch Proben unterschiedlicher Geometrie senden, muss bei einem Wechsel der Betriebsweise kein optisches Bauelement in den Strahlengang gebracht oder entfernt werden.

Im Zusammenhang mit der Erfindung versteht man unter dem Begriff "Probe" bevorzugt eine flüssige Probe, und hierbei insbesondere eine zu analysierende Substanz mit ihrem Trägerstoff, zum Beispiel eine zu analysierende Substanz in einem Lösungsmittel. Der Trägerstoff allein kann als Referenz dienen.

Durch die Anordnung der beiden Probenhalter im gemeinsamen Lichtweg wird also eine serielle Lichtführung bewirkt, welche sehr einfach umsetzbar ist und nur geringen Platzbedarf benötigt. Zudem ist es nunmehr möglich, gleichzeitig Spektren zweier (unterschiedlicher) nicht miteinander vermischter Proben aufzuzeichnen, die dadurch im Detektor, beispielsweise einem Spektrometer, unmittelbar überlagert werden. Da ein- und derselbe Lichtweg bzw. Lichtstrahl zur Durchleuchtung bzw. Anregung beider Proben ausgenutzt wird, müssen auch nicht zwei unterschiedliche Messungen (d.h. beispielsweise eine zusätzliche Referenz- bzw. Leermessung) durchgeführt werden. Zum Beispiel ist dabei die erste Probe eine flüssige Probe, deren Eigenschaften spektralphotometrisch untersucht werden sollen, während die zweite Probe eine Referenz darstellt, deren Eigenschaften bereits analysiert und bekannt sind.

Unter kleinsten Mengen sind Probenmengen von unter 10µl Volumen bzw. 10mg Masse zu verstehen, der Probenhalter bzw. dessen Probeaufnahme müssen daher entsprechend bemessen und konfiguriert sein. Als Beispiele solcher Probenhalter sind gegenüberliegende aufeinander zu bewegliche Aufnahmeflächen zu nennen, an deren Oberfläche ein Tropfen einer flüssigen Probe anhaftet und aufgrund seiner Oberflächenspannung ohne weitere Begrenzung frei gehalten wird, wie sie in der EP 1 210 579 B1 beschrieben sind.

Besonders bevorzugt ist der erste Probenhalter eine Messzelle für kleinste Mengen einer flüssigen Probe, der an seiner Oberseite die Aufnahmestelle zum Aufbringen der ersten Probe, einen oberhalb der Aufnahmestelle zum Öffnen bzw. Schließen verschwenkbaren bzw. lösbaren Reflektor sowie Lichtleiter bzw. Lichtumlenkungen aufweist, die das von der Lichtquelle kommende Licht in der Messzelle nach oben durch die Probe und das Signallicht aus der Probe in Richtung des Detektors leiten. Da die Messzelle Lichtleiter bzw. Lichtumlenkungen umfasst, die so in Bezug zur Aufnahmestelle fixiert sind, dass deren abgestrahltes bzw. aufgenommenes Licht einen Fokuspunkt im Probenvolumen in der Aufnahmestelle aufweist, ist eine Ausrichtung im Lichtweg einfach und flexibel durchführbar. Insbesondere stellt die Messzelle aber ein genau definiertes Probenvolumen zur Verfügung, welches mit der einfallenden Strahlung wechselwirkt. Die Messzelle kann weitere Ausgestaltungen aufweisen, wie sie zum Beispiel in der EP 1 743 162 B1 beschrieben sind. Insbesondere sind dabei die Lichtleiter zum Beispiel als Lichtleitfasern ausgestaltet, so dass diese mithilfe handelsüblicher SMA-Anschlüsse in den Lichtweg gekoppelt werden können. Die Lichtumlenkungen sind hingegen beispielsweise Spiegel, Umlenkprismen, Reflexionsgitter oder ähnliches. Zur Aufnahme des verschwenkbaren Reflektors ist bevorzugt auch ein Deckel vorgesehen, der beispielsweise über ein Scharnier an der Messzelle angebracht sein kann. Als Reflektor kommt zum Beispiel jede Form von Spiegel (halb- oder ganzreflektierend) in Frage, ebenso wie Reflexionsgitter oder Reflexionsprismen, wobei der Reflektor für den Wellenlängenbereich des einfallenden Lichts und des Signallichts einen entsprechend hohen Reflexionsgrad besitzt.

Ferner ist bevorzugt, dass der zweite Probenhalter ein Küvettenhalter zur Aufnahme einer Küvette ist. Auf diese Weise kann mit handelsüblichen Mitteln eine zweite flüssige Probe, beispielsweise eine Referenzflüssigkeit, in eine Küvette gefüllt und in den Lichtweg eingebracht werden, wodurch dann die Überlagerung der Spektren von erster flüssiger Probe und zweiter flüssiger Probe ermöglicht wird. Gleichwohl ist es aber auch denkbar, den zweiten Probenhalter bzw. die Küvette leer zu lassen und lediglich das Signal (Spektrum) der ersten flüssigen Probe aufzuzeichnen. Andererseits kann aber auch die Messzelle leer sein, d.h. mit geschlossenem Reflektor (Deckel), aber ohne Probe betrieben werden, während sich in der Küvette bzw. im zweiten Probenhalter eine zu analysierende Probe befindet. Leer bedeutet in diesem Zusammenhang, dass sich zwar eine Flüssigkeit, Lösung oder ein anderer Träger in der Küvette bzw. im zweiten Probenhalter befindet, jedoch diese(r) keine zu analysierende Substanz enthält. Alternativ kann die Küvette auch ein definiert eingefärbtes Gel enthalten, das als Referenz dient. Im Prinzip kann anstelle einer Küvette auch ein Festkörper, insbesondere ein spezieller Filter wie zum Beispiel ein Holmium-Glasfilter verwendet werden.

Gemäß einer bevorzugten Ausführungsform ist der erste Probenhalter im Lichtweg nach dem zweiten Probenhalter angeordnet. Dabei kann in einer weiteren Ausgestaltung die Vorrichtung einen in den ersten Probenhalter führenden und einen aus ihm herausführenden Lichtleiter umfassen und am Ausgang des zweiten Probenhalters und am Eingang des Detektors jeweils ein Lichtleiteranschluss umfassen, zur Aufnahme der genannten Lichtleiter. Auf diese Weise wird die Ausrichtung der optischen Komponenten der Vorrichtung stark vereinfacht, da die Lichtleiter des ersten Probenhalters das Anregungs- bzw. Signallicht mit minimalen Verlusten vom zweiten Probenhalter (Küvettenhalter) empfangen und in den Detektor weiterleiten. Lediglich die Ausrichtung des zweiten Probenhalters (Küvettenhalters) auf die Lichtquelle muss noch berücksichtigt werden.

In einer besonders bevorzugten Ausführungsform ist jedoch der erste Probenhalter im Lichtweg vor dem zweiten Probenhalter angeordnet. Dabei umfasst die Vorrichtung vorzugsweise einen in den ersten Probenhalter (12) führenden und einen aus ihm herausführenden Lichtleiter und am Ausgang der Lichtquelle und am Eingang des zweiten Probenhalters jeweils Lichtleiteranschlüsse, die zur Aufnahme der genannten Lichtleiter dienen. Wie zuvor kann auf diese Weise die optische Ausrichtung der Vorrichtung stark vereinfacht werden, wobei in diesem Fall der zweite Probenhalter lediglich auf den Detektor auszurichten ist.

Um auch die genannte Ausrichtung des zweiten Probenhalters zu vereinfachen, sind bevorzugt am Ausgang des zweiten Probenhalters und am Eingang des Detektors jeweils Lichtleiteranschlüsse sowie ein Lichtleiter zwischen ihnen vorgesehen. So können eventuelle Verluste bei der Lichtführung entlang des Lichtwegs weiter minimiert werden.

Weiter ist bevorzugt, dass am Eingang des zweiten Probenhalters und/oder am Eingang des Detektors eine Blende und/oder eine Linse vorgesehen sind. Durch Blenden kann der Lichtstrahl bei Bedarf geeignet geformt oder abgeschwächt werden, während er durch Linsen fokussiert werden kann. Die Eingangs- bzw. Ausgangsaperturen der Lichtleiteranschlüsse können ebenfalls als Blenden fungieren. Auch weitere Linsen/Blenden ebenso wie Filter können an geeigneten Positionen, beispielsweise integriert mit den Lichtleiteranschlüssen, vorgesehen werden. Filter können der Angleichung der Intensität der verschiedenen von der Lichtquelle abgestrahlten Frequenzbänder dienen, zum Beispiel um den UV- und den VIS-Anteil anzugleichen. Unter bestimmten Bedingungen kann zum Teil auf diese Linsen verzichtet werden, z. B. wenn das zu detektierende Licht auf einen sehr engen Spalt des Detektors trifft.

Schließlich umfasst gemäß einer bevorzugten Ausführungsform die Vorrichtung ferner eine optische Bank, an welcher der Detektor und der zweite Probenhalter befestigt sind. Auf diese Weise werden die Komponenten, die nicht ohnehin schon mit Lichtleitern versehen sind, in ihrer Lage fixiert, um einen optimalen Lichtweg zu garantieren. Es versteht sich von selbst, dass weitere Komponenten der Vorrichtung, wie zum Beispiel die Xenonlampe oder die Lichtleiteranschlüsse, an der optischen Bank fixiert werden können. Bei geeigneter Vormontage der Komponenten kann auf eine spezielle optische Bank verzichtet werden.

### KURZE BESCHREIBUNG DER ZEICHNUNGEN

Im Folgenden werden anhand der Zeichnungen bevorzugte Ausgestaltungen der vorliegenden Erfindung beschrieben.
- Fig. 1: ist eine schematische Ansicht einer ersten Ausführungsform der erfindungsgemäßen Vorrichtung, bei welcher der Küvettenhalter im Lichtweg vor der Messzelle angeordnet ist;
- Fig. 2: ist eine schematische Ansicht einer zweiten Ausführungsform der vorliegenden Erfindung, bei welcher die Messzelle im Lichtweg vor dem Küvettenhalter angeordnet ist;
- Fig. 3: schließlich ist eine schematische Ansicht einer Variante der zweiten Ausführungsform, wobei der Lichtweg außerhalb der Probenhalter sämtlich durch Lichtleiter gebildet wird.

### DETAILLIERTE BESCHREIBUNG

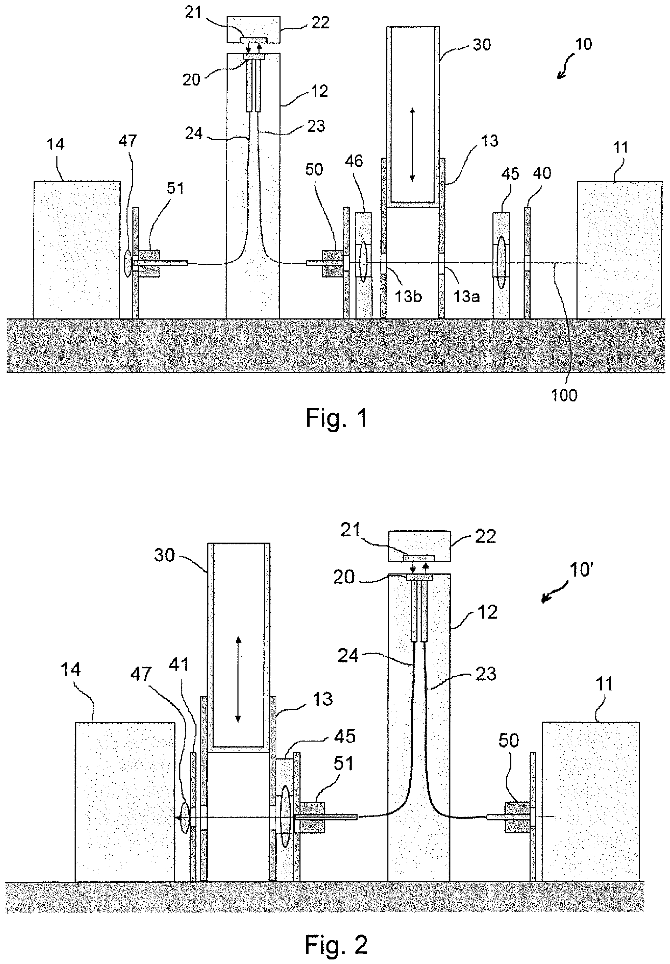

In Fig. 1 ist eine schematische Ansicht einer ersten Ausführungsform der vorliegenden Erfindung gezeigt. Dabei ist die Vorrichtung für die spektralphotometrische Analyse von einer oder mehreren Proben als **Photometer 10 mit serieller Lichtführung ausgeführt,** bei dem Fehler durch unsachgemäßes Handling möglichst ausgeschlossen werden können.

Hierzu sind bei dem **Photometer 10** eine Xenonlampe 11 als Lichtquelle, ein Küvettenhalter 13 als zweiter Probenhalter sowie ein Spektrometer als Detektor 14 fest auf einer Montageplatte, beispielsweise einer optischen Bank, befestigt und so angeordnet, dass ein Lichtweg 100 von der Xenonlampe 11 bis zum Detektor 14 gebildet wird. Zweckmäßigerweise sind auf der Montageplatte weitere optische Elemente, wie beispielsweise Blenden 40 zur Regulierung der Lichtmenge und Linsen 45 zur Fokussierung sowie Filter befestigt. Bei der Standard Transmission Spectroscopy benötigt man zum Beispiel einen VIS-Filter vor der Lampe, um den UV- und den sichtbaren VIS-Anteil anzugleichen. Ausgehend von der Xenonlampe 11 tritt also das von ihr ausgestrahlte Licht durch die Blende 40 und die Linse 45, von welcher es in die Mitte eines Küvettenhalters 13 fokussiert wird. Hierzu ist der Küvettenhalter 13 mit Eintritts- und Austrittsöffnungen 13a und 13b versehen, welche an gegenüberliegenden Seiten des Küvettenhalters 13 entlang des geraden Lichtwegs 100 vorgesehen und entsprechend bemessen sind. Die Öffnungen 13a und 13b können zudem in Abwesenheit der Blende 40 als Blenden fungieren.

Der Küvettenhalter 13 ist so bemessen, dass in ihn eine handelsübliche Küvette 30 eingesetzt werden kann (siehe Doppelpfeil in Fig. 1), wobei der Küvettenhalter 13 die Küvette 30 reproduzierbar in einer festen Position und Orientierung hält. Dabei sind die transparenten Küvettenwände senkrecht zum Lichtweg 100 angeordnet. Nach Durchtritt durch den Küvettenhalter 13 und die Küvette 30 tritt der Lichtstrahl durch eine weitere Linse 46, welche den aus dem Küvettenhalter 13 austretenden Strahl kollimiert und in einen faseroptischen Anschluss (Lichtleiteranschluss) 50, zum Beispiel einen SMA-Anschluss, einspeist. Hierbei kann die Linse 46 auch zweckmäßig mit dem faseroptischen Anschluss 50 integriert sein. An den faseroptischen Anschluss 50 ist eine Lichtleitfaser 23 einer Kleinstvolumenmesszelle 12 angeschlossen, welche das Licht in eine Aufnahmestelle 20 leitet. Das Licht durchquert die Aufnahmestelle 20 und wird daraufhin von einem über der Aufnahmestelle angeordneten Reflektor 21, der sich in einem verschwenkbaren oder lösbaren sowie bewegbaren Deckel 22 der Messzelle 12 befindet, reflektiert und, nach erneutem Durchtritt durch die Probe, in eine optische Faser 24 eingekoppelt, welche das Licht aus der Messzelle herausführt. Das externe Ende der optischen Faser 24 ist wiederum in einen faseroptischen Anschluss 51 angeschlossen, der mithilfe einer weiteren Linse 47 das Licht in das Spektrometer 14 koppelt und auf dessen Eintrittsspalt fokussiert. Die Linse 47 kann aber auch entfallen.

Im Gebrauch können mit der oben beschriebenen Vorrichtung folgende Messungen durchgeführt werden. Zum einen kann der Küvettenhalter 13 leer bleiben und das Licht somit direkt, ohne Durchtritt durch die Küvette 30, in die Messzelle 12 eingekoppelt werden. In diesem Falle wird die Vorrichtung wie ein klassisches Spektrometer betrieben, bei dem der Probenhalter die beschriebene Kleinstvolumenmesszelle ist. Zur Funktion der Messzelle wird auf die EP 1 743 162 B1 verwiesen. Andererseits kann eine Küvette 30 in den Küvettenhalter 13 eingesetzt und die Messzelle 12 leer gelassen werden. Auf diese Weise steht ein herkömmliches Spektrometer zur Verfügung, bei dem flüssige Proben in der Küvette 30 spektrometrisch analysiert werden können. Schließlich kann die Vorrichtung in einem dritten Modus betrieben werden, bei dem eine Küvette 30 in den Küvettenhalter 13 eingesetzt ist und die Messzelle 12 im Strahlgang nach dem Küvettenhalter 13 eingebaut und über die optischen Faseranschlüsse 50 und 51 angeschlossen ist. Während sich auf der Aufnahmestelle 20 der Messzelle 12 eine kleinste Menge einer zu analysierenden Probe (erste Probe) befindet, ist in der Küvette 30 beispielsweise eine Referenzflüssigkeit (zweite Probe) eingefüllt, deren Eigenschaften (Spektrum) bekannt sind. Das Licht der Xenonlampe 11 tritt somit zunächst in die Referenzflüssigkeit in der Küvette 30 ein, so dass das aus der Küvette 30 und dem Küvettenhalter 13 austretende Licht die spektrometerische Signatur der Referenzflüssigkeit trägt. Anschließend wird es in die Messzelle 12 eingekoppelt, durchquert die zu analysierende Probenflüssigkeit in der Aufnahmestelle 20 und tritt durch die aus der Kleinstvolumenmesszelle 12 heraustretende optische Faser 24 schließlich in das Spektrometer 14 ein. Dabei umfasst das vom Spektrometer 14 empfangene Licht nun zusätzlich zur spektrometrischen Signatur der zu analysierenden Probe aus der Messzelle 12 auch die spektrometrische Signatur der Referenzflüssigkeit, so dass das vom Spektrometer 14 bereitgestellte Spektrum eine Überlagerung der Spektren von Probenflüssigkeit und Referenzflüssigkeit ist.

Anhand experimenteller Ergebnisse konnte gezeigt werden, dass die oben beschriebene erfindungsgemäße Vorrichtung die Erwartungen an Signalstärke und Reproduzierbarkeit erfüllt und beide Messplätze, das heißt die Messzelle 12 und die Küvette 30/der Küvettenhalter 13, vollwertig nutzbar sind. Im Zuge dieser Experimente wurde außerdem festgestellt, dass eine Umkehrung der Anordnung von Küvettenhalter 13 und Messzelle 12 zu einer noch besseren Stabilität der Daten führt. Diese Anordnung wird nun mit Bezug auf Figur 2 beschrieben.

Figur 2 entspricht somit weitestgehend der Anordnung der Figur 1, jedoch ist in dieser zweiten Ausführungsform der erfindungsgemäßen Photometers 10' die Kleinstvolumenmesszelle 12 im Lichtweg vor dem Küvettenhalter 13 angeordnet. Somit wird Licht aus der Xenonlampe 11 über einen faseroptischen Anschluss (zum Beispiel einen SMA-Anschluss) 50 direkt in die Lichtleitfaser 23 der Messzelle 12 eingekoppelt. Vor dem Eintritt in den Lichtleiter 23 kann optional eine Blende oder ein (Grau-)Filter am faseroptischen Anschluss 50 angebracht werden, um die in den Messkopf eintretende Lichtmenge zu regulieren. Das Licht passiert die Aufnahmestelle 20 in der Messzelle 12 und wird durch den Reflektor 21 im Deckel 22 reflektiert. Durch die Austrittsfaser 24 wird das Licht zum Küvettenhalter 13 geleitet, an dessen Eintrittsseite ein faseroptischer Anschluss (SMA-Anschluss) 51 das mit der Signatur der ersten Probe überlagerte Signallicht aus der Faser auskoppelt und über die Linse 45 in die Küvette 30 fokussiert. Der SMA-Anschluss 51 und die Linse 45 sind dabei in dieser Ausführungsform als integriertes Bauteil dargestellt, können aber auch separat ausgebildet sein. Ebenso ist eine Integration von SMA-Anschluss 51, Linse 45 und Küvettenhalter 13 denkbar. Nach Durchtritt durch die Küvette 30/den Küvettenhalter 13 wird das Licht durch eine Blende 41 geformt und durch eine Linse 47 auf den Eintrittspalt des Spektrometers 14 fokussiert.

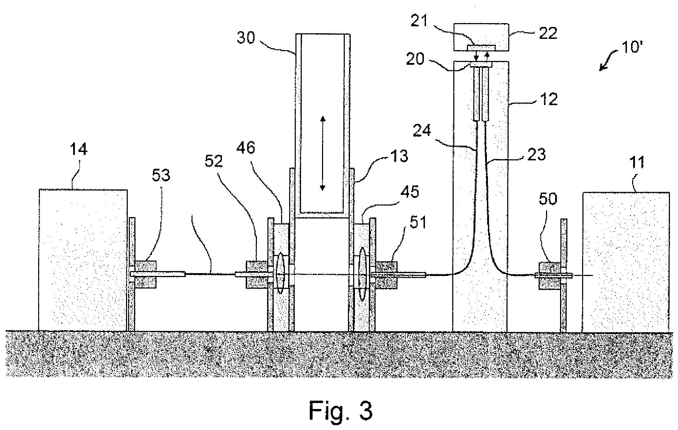

Schließlich kann, wie in Figur 3 dargestellt, auch der Lichtweg vom Küvettenhalter 13 zum Spektrometer 14 mithilfe einer optischen Faser überbrückt werden, wozu zweckmäßig ein faseroptischer Anschluss 52 (SMA-Anschluss) sowie eine Kollimationslinse 46 an der Ausgangsseite des Küvettenhalters 13 vorgesehen sind und entsprechend ein faseroptischer Anschluss 53 (SMA-Anschluss) am Eingang des Detektors angeordnet ist.

Wie zuvor bei der Ausführungsform der Figur 1 können auch in den Ausführungsformen der Figuren 2 und 3 die jeweiligen Messeinheiten 12 und 13 einzeln zur Messung verwendet werden (d. h. jeweils die Messzelle 12 oder der Küvettenhalter 13 sind leer), oder beide Messeinheiten 12, 13 können in Reihenschaltung eingesetzt werden, um eine gewollte Überlagerung der Probenspektren zu erzielen.

Der Wechsel vom reinen Küvettenbetrieb zu reinen Kleinstvolumenmessungen ist ohne Bewegung einer optischen und/oder elektronischen Komponente der erfindungsgemäßen Vorrichtung möglich. Die Umstellung erfolgt einfach durch das Einsetzen bzw. Herausnehmen der Küvette 30. Dies gilt auch beim Umschalten auf einen Betrieb unter gleichzeitiger Verwendung einer Probe bzw. Referenzflüssigkeit sowohl in einer Küvette wie auch in einer Kleinstvolumenmesszelle.

Bei einer großen Anzahl von Messungen kann eine Probe mit bekannten optischen Eigenschaften in der Küvette 30 zur simultanen Kontrolle der Referenz verwendet werden. Fast immer gibt es nämlich einen Wellenlängenbereich, in dem die zu untersuchende Probe nicht absorbiert oder aber eine wellenlängenunabhängige Absorbanz aufweist. Dann können nach der üblichen Ermittlung des Intensitätsspektrums der leeren Lösung in der Kleinstvolumenmesszelle 12, wobei sich in der Küvette 30 ebenfalls die leere Lösung befindet (d.h. in diesem Fall ist die erste Probe gleich der zweiten Probe), vorzugsweise aber eine Lösung genau bekannter Konzentration und Absorbanz, alle weiteren Messungen in der Kleinstvolumenzelle unter rechnerischer Ermittlung des Intensitätsspektrums der zugehörigen leeren Lösung vorgenommen werden, denn diese steckt im Intensitätsspektrum der Probe. Bei dieser Anwendung bleibt bei allen Messungen die Lösung in der Küvette 30 unverändert, das Verfahren entspricht formal also dem in einem echten Zweistrahlphotometer, wird jedoch von einem erfindungsgemäßen Photometer 10, 10' mit nur einem Lichtweg durchgeführt.

Für die quantitative Bestimmung von Substanzen ist es oft sinnvoll, die Konzentration der zu untersuchende Substanz in mehreren genau definierten Stufen zu erhöhen. Beim erfindungsgemäßen Photometer 10, 10' muss dazu keine Substanz - unter Beachtung der Verdünnung - der Probe zugegeben werden, sondern es genügt, die Erhöhung der Substanzmenge in der Küvette 30 vorzunehmen. Bei dieser Anwendung bleibt die Probe unverändert, denn Veränderungen werden nur in der Küvette 30 vorgenommen.

Für die Genauigkeit der quantitativen Bestimmung der Komponenten einer flüssigen Mischung (einem sog. Multikomponentensystem) ist der Anteil der einzelnen Substanzen von entscheidender Bedeutung. Um die Untersuchungen mit aussagekräftigen Mengenverhältnissen durchzuführen, ist es bei dem erfindungsgemäßen Photometer 10, 10' aber nicht erforderlich, der Probe gezielt einzelne Komponenten zuzugeben. Diese können vielmehr, ohne die Probe in Zusammensetzung und Konzentration zu verändern, in rascher Folge und nahezu beliebiger Anzahl in die Küvette 30 gebracht werden.

Das erfindungsgemäße Photometer 10, 10' bietet zudem zahlreiche weitere Möglichkeiten einer verfeinerten Analyse kleinster Mengen flüssiger Proben durch Addition der Absorbanz von Substanzen, deren Einfluss auf das Absorptionsspektrum der Probe von Bedeutung sind. Normalerweise kann dies nur rechnerisch anhand von Daten aus Datenbanken erfolgen. Hier ist dies experimentell mit beliebigen Lösungen möglich, die in die Küvette 30 eingebracht werden. So kann eine analytisch sinnvolle Veränderung der Absorbanz durch geeignet absorbierende Hilfssubstanzen erreicht werden, ohne dass eine Vermischung der Komponenten erforderlich ist.

## Patentansprüche

1. Vorrichtung (10, 10') für die lichtspektroskopische Analyse einer oder mehrerer flüssiger Proben, umfassend:
eine Lichtquelle (11) zur Erzeugung und Ausstrahlung von Licht entlang eines einzigen Lichtwegs (100),
einen ersten Probenhalter (12) mit einer Aufnahmestelle (20) für kleinste Mengen von unter 10µl Volumen bzw. 10mg Masse einer ersten Probe, welcher so im Lichtweg (100) angeordnet ist, dass die Aufnahmestelle (20) vom Licht durchstrahlt wird, wobei die Aufnahmestelle (20) eine Aufnahmefläche ist und der Aufnahmefläche gegenüber eine bewegliche Fläche vorgesehen ist, welche sich auf die Aufnahmefläche zubewegen kann, so dass die flüssige Probe zwischen der Aufnahmefläche und der beweglichen Fläche eingelegt wird,
einen zweiten Probenhalter (13) für eine zweite Probe, welcher so im Lichtweg (100) angeordnet ist, dass der zweite Probenhalter vom Licht durchstrahlt wird, und
einen Detektor (14) zur Erfassung des von den Probenhaltern (12, 13) entlang des Lichtwegs (100) kommenden Lichts,
wobei der Lichtweg (100) dabei von der Lichtquelle durch die beiden Probenhalter (12, 13) zum Detektor (14) verläuft und das Licht die beiden Probenhalter sukzessiv durchstrahlt.

2. Vorrichtung (10, 10') nach Anspruch 1, wobei der erste Probenhalter eine Messzelle (12) für kleinste Mengen einer flüssigen Probe ist, der an seiner Oberseite die Aufnahmestelle (20) zum Aufbringen der ersten Probe, einen oberhalb der Aufnahmestelle (20) zum Öffnen bzw. Schließen verschwenkbaren bzw. lösbaren Reflektor (21) sowie Lichtleiter (23, 24) bzw. Lichtumlenkungen aufweist, die das von der Lichtquelle kommende Licht in der Messzelle (12) nach oben durch die Probe und das Signallicht aus der Probe in Richtung des Detektors (14) leiten.

3. Vorrichtung (10, 10') nach Anspruch 1 oder 2, wobei der zweite Probenhalter ein Küvettenhalter (13) zur Aufnahme einer Küvette (30) ist.

4. Vorrichtung (10) nach einem der Ansprüche 1 bis 3, wobei der erste Probenhalter (12) im Lichtweg (100) nach dem zweiten Probenhalter (13) angeordnet ist.

5. Vorrichtung (10) nach Anspruch 4, wobei die Vorrichtung einen in den ersten Probenhalter (12) führenden und einen aus ihm herausführenden Lichtleiter (23, 24) umfasst und am Ausgang des zweiten Probenhalters (13) und am Eingang des Detektors (14) jeweils Lichtleiteranschlüsse (50, 51) umfasst, die die genannten Lichtleiter (23, 24) aufnehmen.

6. Vorrichtung (10') nach einem der Ansprüche 1 bis 3, wobei der erste Probenhalter (12) im Lichtweg (100) vor dem zweiten Probenhalter (13) angeordnet ist.

7. Vorrichtung (10') nach Anspruch 6, wobei die Vorrichtung einen in den ersten Probenhalter (12) führenden und einen aus ihm herausführenden Lichtleiter (23, 24) umfasst und am Ausgang der Lichtquelle (11) und am Eingang des zweiten Probenhalters (13) jeweils Lichtleiteranschlüsse (50, 51) umfasst, die die genannten Lichtleiter (23, 24) aufnehmen.

8. Vorrichtung (10') nach Anspruch 6 oder 7, wobei am Ausgang des zweiten Probenhalters (13) und am Eingang des Detektors (14) jeweils Lichtleiteranschlüsse (52, 53) sowie ein Lichtleiter zwischen ihnen vorgesehen sind.

9. Vorrichtung (10') nach einem der vorangehenden Ansprüche, wobei am Eingang des zweiten Probenhalters (13) und/oder am Eingang des Detektors (14) eine Blende (41) und/oder eine Linse (47) vorgesehen sind.

10. Vorrichtung nach einem der vorangehenden Ansprüche, ferner eine optische Bank umfassend, an welcher der Detektor (14) und der zweite Probenhalter (13) befestigt sind.

## Claims

1. Device (10, 10') for the light-spectroscopic analysis of one or more liquid samples, comprising:
a light source (11) for generating and emitting light along a single light path (100),
a first sample holder (12) with a receiving point (20) for the smallest quantities of below 10 µl volume or 10 mg mass of a first sample, which is arranged in the light path (100) so that light radiates through the receiving point (20), wherein the receiving point (20) is a receiving surface and the receiving surface is provided opposite a movable surface, which can move towards the receiving surface so that the liquid sample is sandwiched between the receiving surface and the moveable surface,
a second sample holder (13) for a second sample, which is arranged in the light path (100) so that light radiates through the second sample holder, and
a detector (14) for detecting the light coming from the sample holders (12, 13) along the light path (100),
wherein the light path (100) runs from the light source through the two sample holders (12, 13) to the detector (14) and the light radiates through the two sample holders successively.

2. Device (10, 10') according to claim 1, wherein the first sample holder is a measuring cell (12) for the smallest quantities of a liquid sample, and has on its upper side the receiving point (20) for the application of the first sample, a reflector (21) above the receiving point (20) which is pivotable or detachable for opening and closing, and light conductors (23, 24) or light deflectors which in the measuring cell (12) conduct the light from the light source upwards through the sample and the signal light from the sample in the direction of the detector (14).

3. Device (10, 10') according to claim 1 or 2, wherein the second sample holder is a cuvette holder (13) for receiving a cuvette (30).

4. Device (10) according to any of claims 1 to 3, wherein the first sample holder (12) is arranged in the light path (100) after the second sample holder (13).

5. Device (10) according to claim 4, wherein the device comprises one light conductor (23, 24) leading into the first sample holder (12) and one light conductor leading out of the latter and comprises light conductor connectors (50, 51) respectively at the output of the second sample holder (13) and at the input of the detector (14), which connectors receive said light conductors (23, 24).

6. Device (10') according to any of claims 1 to 3, wherein the first sample holder (12) is arranged in the light path (100) before the second sample holder (13).

7. Device (10') according to claim 6, wherein the device comprises one light conductor (23, 24) leading into the first sample holder (12) and one light conductor leading out of the latter and comprises light conductor connectors (50, 51) respectively at the output of the light source (11) and at the input of the second sample holder (13), which connectors receive said light conductors (23, 24).

8. Device (10') according to claim 6 or 7, wherein light conductor connectors (52, 53) are provided respectively at the output of the second sample holder (13) and at the input of the detector (14) and a light conductor is provided between them.

9. Device (10') according to any of the preceding claims, wherein a diaphragm (41) and/or a lens (47) are provided at the input of the second sample holder (13) and/or at the input of the detector (14).

10. Device according to any of the preceding claims, further comprising an optical bench to which the detector (14) and the second sample holder (13) are fastened.

## Revendications

1. Dispositif (10, 10') pour l'analyse photospectroscopique d'un ou plusieurs échantillons liquides, comprenant :
une source de lumière (11) pour la production et l'irradiation de lumière le long d'un trajet lumineux (100) unique ;
un premier contenant d'échantillon (12) avec un emplacement de réception (20) pour les plus petites quantités en dessous de 10 µl en volume ou de 10 mg en masse d'un premier échantillon, qui est agencé dans le trajet lumineux (100) de sorte que l'emplacement de réception (20) soit irradié par la lumière, dans lequel l'emplacement de réception (20) est une surface de réception et la surface de réception est prévue en regard d'une surface mobile, qui peut se déplacer sur la surface de réception de sorte que l'échantillon liquide soit introduit entre la surface de réception et la surface mobile,
un second contenant d'échantillon (13) pour un second échantillon, qui est agencé dans le trajet lumineux (100) de sorte que le second contenant d'échantillon soit irradié par la lumière, et
un détecteur (14) pour détecter la lumière venant des contenants d'échantillons (12, 13) le long du trajet lumineux (100),
dans lequel le trajet lumineux (100) s'étend en l'occurrence de la source de lumière au détecteur (14) à travers les deux contenants d'échantillons (12, 13) et la lumière irradie successivement les deux contenants d'échantillons.

2. Dispositif (10, 10') selon la revendication 1, dans lequel le premier contenant d'échantillon est une cellule de mesure (12) pour des plus petites quantités d'un échantillon liquide, qui présente à son côté supérieur l'emplacement de réception (20) pour appliquer le premier échantillon, un réflecteur (21) pivotant ou détachable au-dessus de l'emplacement de réception (20) pour ouvrir ou fermer ainsi que des guides de lumière (23, 24) ou des renvois de lumière, qui guident la lumière venant de la source de lumière dans la cellule de mesure (12) vers le haut à travers l'échantillon et la lumière du signal hors de l'échantillon dans la direction du détecteur (14).

3. Dispositif (10, 10') selon la revendication 1 ou 2, dans lequel le second contenant d'échantillon est un contenant à cuvette (13) pour la réception d'une cuvette (30).

4. Dispositif (10) selon l'une quelconque des revendications 1 à 3, dans lequel le premier contenant d'échantillon (12) est agencé dans le trajet lumineux (100) après le second contenant d'échantillon (13).

5. Dispositif (10) selon la revendication 4, dans lequel le dispositif comprend un guide de lumière menant dans le premier contenant d'échantillon (12) et un guide de lumière (23, 24) menant hors de celui-ci et comprend à la sortie du second contenant d'échantillon (13) et à l'entrée du détecteur (14) respectivement des connexions de guides de lumière (50, 51) qui reçoivent les guides de lumière (23, 24) mentionnés.

6. Dispositif (10') selon l'une quelconque des revendications 1 à 3, dans lequel le premier contenant d'échantillon (12) est agencé dans le trajet lumineux (100) devant le second contenant d'échantillon (13).

7. Dispositif (10') selon la revendication 6, dans lequel le dispositif comprend un guide de lumière menant dans le premier contenant d'échantillon (12) et un guide de lumière (23, 24) menant hors de celui-ci et comprend à la sortie de la source de lumière (11) et à l'entrée du second contenant d'échantillon (13) respectivement des connexions de guides de lumière (50, 51) qui reçoivent les guides de lumière (23, 24) mentionnés.

8. Dispositif (10') selon la revendication 6 ou 7, dans lequel il est prévu à la sortie du second contenant d'échantillon (13) et à l'entrée du détecteur (14) respectivement des connexions de guides de lumière (52, 53) ainsi qu'un guide de lumière entre elles.

9. Dispositif (10') selon l'une quelconque des revendications précédentes, dans lequel il est prévu à l'entrée du second contenant d'échantillon (13) et/ou à l'entrée du détecteur (14) un écran (41) et/ou une lentille (47).

10. Dispositif selon l'une quelconque des revendications précédentes, comprenant en outre un banc optique sur lequel le détecteur (14) et le second contenant d'échantillon (13) sont fixés.
